# FASCICULE DE BREVET EUROPEEN

(11) **EP 0 969 996 B1**
(45) Date de publication et mention de la délivrance du brevet: **14.01.2004**
(21) Numéro de dépôt: 98908174.0
(22) Date de dépôt: 12.02.1998
(51) Int. Cl.: B60T 11/20, B60T 11/236

(54) **MAITRE-CYLINDRE TANDEM COMPACT A SORTIE PRIMAIRE DECALEE**
KOMPAKTER TANDEMHAUPTZYLINDER MIT EINEM VERSCHOBENEN PRIMÄRAUSLASS
COMPACT DUAL MASTER CYLINDER WITH OFFSET PRIMARY OUTLET

(30) Priorité: 21.03.1997 FR 9703453
(43) Date de publication de la demande: 12.01.2000
(73) Titulaire: BOSCH SISTEMAS DE FRENADO, S.L., 08080 Barcelona 6 (ES)
(72) Inventeur: SIMON BACARDIT, Juan, F-93700 Drancy (FR)
(74) Mandataire: Bentz, Jean-Paul
(86) Numéro de dépôt international: PCT/FR1998/000268
(87) Numéro de publication internationale: WO 1998/042555

(56) Documents cités:
- FR-A- 2 493 783
- US-A- 5 187 934

## Description

La présente invention concerne un maître-cylindre tandem hydraulique comprenant :
- un corps percé d'un alésage longitudinal délimité par une paroi au moins partiellement cylindrique dont une première extrémité forme une ouverture, et dont une seconde extrémité est fermée par un fond, les première et seconde extrémités étant séparées par une distance sur laquelle sont définies des première et seconde sections de longueur contigües l'une à l'autre, et ce corps présentant une partie supérieure dans laquelle sont percées des première et seconde entrées pour un fluide hydraulique à basse pression;
- des pistons primaire et secondaire, de forme cylindrique, susceptibles de coulisser respectivement dans les première et seconde sections de longueur,
- une chambre de pression primaire, définie dans la première section de longueur entre les pistons primaire et secondaire, cette chambre renfermant au moins un premier ressort exerçant entre les pistons une première force élastique qui tend à écarter ces pistons l'un de l'autre;
- une chambre de pression secondaire, définie dans la seconde section de longueur entre le piston secondaire et le fond, cette chambre renfermant au moins un second ressort exerçant entre le piston secondaire et le fond une seconde force élastique dans un sens qui tend à écarter ce piston secondaire du fond ;
- au moins quatre coupelles d'étanchéité, rendues solidaires du corps et comprenant des premières coupelles amont et aval fermant la chambre primaire et enserrant le piston primaire, et des secondes coupelles amont et aval enserrant le piston secondaire et séparant de façon étanche les chambres de pression primaire et secondaire, chaque coupelle aval étant plus proche du fond du corps que la coupelle amont qui enserre le même piston;
- un premier canal de réalimentation reliant la première entrée de fluide à un premier volume intermédiaire situé entre les premières coupelles amont et aval, un second canal de réalimentation reliant la seconde entrée de fluide à un second volume intermédiaire situé entre les secondes coupelles amont et aval ;
- des premier et second orifices situés dans la partie supérieure du corps, communiquant respectivement avec les chambres de pression primaire et secondaire et constituant les sorties respectives de ces chambres, le premier orifice se situant dans la seconde section de longueur et entre la première coupelle aval et la seconde coupelle amont, et
- les pistons primaire et secondaire étant guidés par la paroi de l'alésage, lesdits pistons primaire et secondaire étant en contact avec la paroi de l'alésage et le corps étant en outre percé d'un premier passage longitudinal reliant la première coupelle aval, la seconde coupelle amont et le premier orifice, et communiquant avec la chambre de pression primaire par au moins un premier passage radial situé entre les première et seconde sections de longueur.

Un maître-cylindre de ce type est connu dans l'art antérieur, tel que représenté par exemple par le document de brevet EP- 0 387 012 ou le document de brevet US-A-5 187 934.

Le maître-cylindre décrit dans ce document, a priori conçu pour présenter une compacité axiale satisfaisante, utilise en revanche, à l'intérieur du corps, une cartouche cylindrique qui conduit nécessairement à une augmentation non négligeable du diamètre externe du maître-cylindre.

Par ailleurs, dans la mesure où l'arrangement interne de ce maître-cylindre est conçu de manière telle que la cartouche se trouve à distance du piston primaire, ce dernier est par construction privé de guidage efficace, de sorte que toute poussée oblique lors de l'actionnement du maître-cylindre risque de provoquer le blocage du piston primaire dans l'alésage.

Dans ce contexte, la présente invention a pour but d'obvier aux inconvénients précités.

A cette fin, le maître-cylindre selon l'invention, par ailleurs conforme à la définition qui en est donnée dans le préambule ci-dessus, est essentiellement caractérisé en ce ledit passage est délimité par une paroi externe et une paroi interne, une première face de la paroi interne définissant le passage et la deuxième face de la paroi interne opposée à la première face étant du côté de l'alésage, et en ce que ledit premier passage radial est pratiquée dans ladite paroi interne.

Dans un mode de réalisation adapté à une fabrication en grande série, le fond peut comprendre une pièce d'obturation rapportée sur le corps et recevant à coulissement le piston secondaire, cette pièce d'obturation pouvant alors être percée d'un second passage longitudinal mettant la seconde coupelle aval en communication avec le second orifice, et d'un second passage radial mettant le second orifice en communication avec la chambre de pression secondaire.

La réalimentation de la chambre de pression primaire peut être accélérée en dotant le maître-cylindre d'un raccord cylindrique de réalimentation inséré dans le premier canal de réalimentation et traversant la première coupelle aval pour atteindre directement le premier volume intermédiaire.

Par ailleurs, il peut être avantageux de prévoir qu'une pièce de guidage, portant la première coupelle amont, soit montée sur la première extrémité de la paroi pour optimiser le guidage du piston primaire.

D'autres caractéristiques et avantages de l'invention ressortiront clairement de la description qui en est faite ci-après, à titre indicatif et nullement limitatif, en référence aux dessins annexés, dans lesquels:
- la Figure 1 est une vue en coupe d'un maître-cylindre conforme à une première variante d'exécution de l'invention; et
- la Figure 2 est une vue en coupe d'un maître-cylindre conforme à une seconde variante d'exécution de l'invention.

L'invention concerne un maître-cylindre tandem hydraulique comprenant principalement un corps 1, des première et seconde entrées 2a, 2b pour un fluide hydraulique à basse pression, des pistons primaire 3 et secondaire 4, une chambre de pression primaire 5, une chambre de pression secondaire 6, quatre coupelles d'étanchéité 91a, 91b, 92a, 92b, des premier et second canaux de réalimentation 21, 22, et des premier et second orifices de sortie 41 et 42 pour le fluide hydraulique sous pression.

Le corps 1 est percé d'un alésage longitudinal délimité par une paroi au moins partiellement cylindrique 100, dont une première extrémité 101 forme une ouverture, et dont une seconde extrémité 102 est fermée par un fond 103.

Les première et seconde extrémités 101 et 102 sont séparées par une distance D sur laquelle sont définies des première et seconde sections de longueur S1, S2 contigües l'une à l'autre.

Les première et seconde entrées 2a, 2b pour le fluide hydraulique à basse pression sont percées dans la partie supérieure 1a du corps 1.

La chambre de pression primaire 5 est définie au moins en partie dans la première section de longueur S1 et délimitée par les pistons primaire et secondaire 3, 4, cette chambre 5 renfermant au moins un premier ressort précontraint 7 exerçant entre les pistons une première force élastique qui tend à écarter ces pistons l'un de l'autre.

La chambre de pression secondaire 6 est définie dans la seconde section de longueur S2 entre le piston secondaire 4 et le fond 103, cette chambre 6 renfermant au moins un second ressort précontraint 8 exerçant entre le piston secondaire et le fond 103 une seconde force élastique dans un sens qui tend à écarter ce piston secondaire du fond.

Les quatre coupelles d'étanchéité 91a, 91b, 92a, 92b sont rendues solidaires du corps 1 et comprennent des premières coupelles amont et aval 91a, 91b fermant la chambre primaire 5 et enserrant le piston primaire 3, et des secondes coupelles amont et aval 92a, 92b enserrant le piston secondaire 4 et séparant de façon étanche les chambres de pression primaire et secondaire 5, 6, chaque coupelle aval 91b, 92b étant plus proche du fond 103 du corps que la coupelle amont 91a, 92a qui enserre le même piston.

Le premier canal de réalimentation 21 relie la première entrée de fluide 2a à un premier volume intermédiaire 31 situé entre les premières coupelles amont et aval 91a, 91b. tandis que le second canal de réalimentation 22 relie la seconde entrée de fluide 2b à un second volume intermédiaire 32 situé entre les secondes coupelles amont et aval 92a, 92b.

Les premier et second orifices 41, 42, qui constituent les sorties respectives des chambres de pression primaire et secondaire 5 et 6 pour le fluide hydraulique pressurisé, sont situés dans la partie supérieure 1a du corps, et communiquent respectivement avec ces chambres de pression primaire et secondaire 5, 6, le premier orifice 41 se situant dans la seconde section de longueur S2 et entre la première coupelle aval 91 b et la seconde coupelle amont 92a.

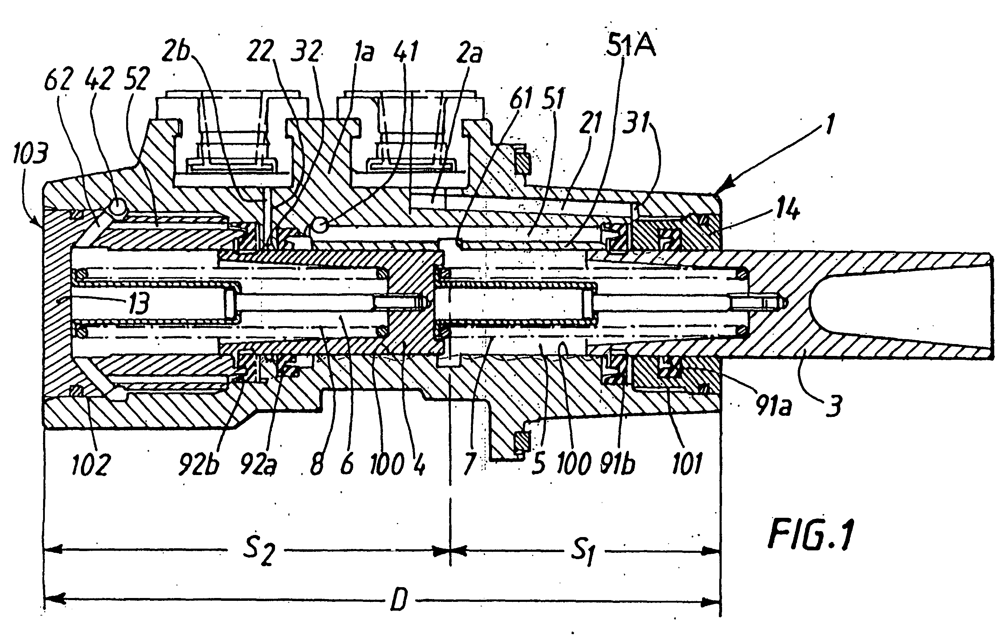

Selon l'invention, comme le montre la figure 1, les pistons primaire et secondaire 3, 4 sont guidés par la paroi 100 de l'alésage, avec laquelle ils sont en contact, et le corps 1 est en outre percé d'un premier passage longitudinal 51 reliant la première coupelle aval 91b, la seconde coupelle amont 92a et le premier orifice 41, et communiquant avec la chambre de pression primaire 5 par un premier passage radial 61 situé entre les première et seconde sections de longueur S1, S2.

Le fond 103 peut comprendre une pièce d'obturation 13 rapportée sur le corps et recevant à coulissement le piston secondaire 4, cette pièce d'obturation étant percée d'un second passage longitudinal 52 mettant la seconde coupelle aval 92b en communication avec le second orifice 42, et d'un second passage radial 62 mettant le second orifice 42 en communication avec la chambre de pression secondaire 6.

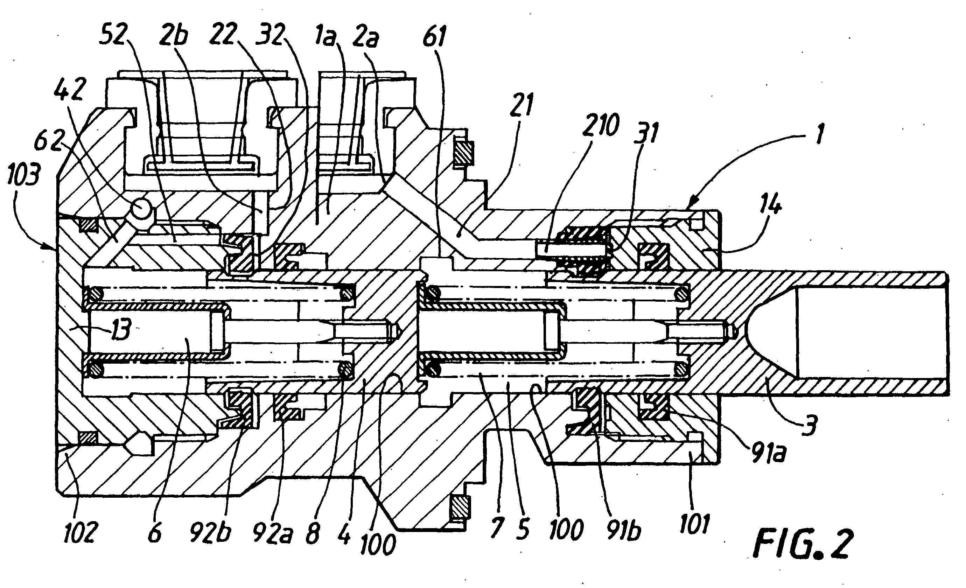

La figure 2 illustre une variante d'exécution du maître-cylindre de la figure 1, dans laquelle le premier canal de réalimentation 21 et le premier passage longitudinal 51 ne sont pas coplanaires, le premier passage longitudinal 51 n'ayant donc pas été représenté sur cette figure pour des raisons de clarté.
Par ailleurs, comme le montre la figure 2, un raccord cylindrique de réalimentation 210 peut être inséré dans le premier canal de réalimentation 21, pour traverser la première coupelle aval 91b et atteindre directement le premier volume intermédiaire 31.

Enfin, comme le montrent les figures 1 et 2, il peut être avantageux de parfaire le guidage du piston primaire en prévoyant une pièce de guidage 14, portant la première coupelle amont 91a, et montée sur la première extrémité 101 de la paroi 100.

## Revendications

1. Maître-cylindre tandem hydraulique comprenant :
- un corps (1) percé d'un alésage longitudinal délimité par une paroi au moins partiellement cylindrique (100) dont une première extrémité (101) forme une ouverture, et dont une seconde extrémité (102) est fermée par un fond (103), les première et seconde extrémités étant séparées par une distance (D) sur laquelle sont définies des première et seconde sections de longueur (S1, S2) contigües l'une à l'autre, et ce corps présentant une partie supérieure (1a) dans laquelle sont percées des première et seconde entrées (2a, 2b) pour un fluide hydraulique à basse pression;
- des pistons primaire (3) et secondaire (4), de forme cylindrique, susceptibles de coulisser respectivement dans les première et seconde sections de longueur (S1, S2);
- une chambre de pression primaire (5), définie au moins en partie dans la première section de longueur (S1) entre les pistons primaire et secondaire (3, 4), cette chambre (5) renfermant au moins un premier ressort (7) exerçant entre les pistons une première force élastique qui tend à écarter ces pistons l'un de l'autre;
- une chambre de pression secondaire (6), définie dans la seconde section de longueur (S2) entre le piston secondaire (4) et le fond (103), cette chambre (6) renfermant au moins un second ressort (8) exerçant entre le piston secondaire et le fond (103) une seconde force élastique dans un sens qui tend à écarter ce piston secondaire du fond ;
- au moins quatre coupelles d'étanchéité (91a, 91b, 92a, 92b), rendues solidaires du corps et comprenant des premières coupelles amont et aval (91a, 91b) fermant la chambre primaire (5) et enserrant le piston primaire (3), et des secondes coupelles amont et aval (92a, 92b) enserrant le piston secondaire (4) et séparant de façon étanche les chambres de pression primaire et secondaire (5, 6), chaque coupelle aval (91b, 92b) étant plus proche du fond (103) du corps que la coupelle amont (91a, 92a) qui enserre le même piston;
- un premier canal de réalimentation (21) reliant la première entrée de fluide (2a) à un premier volume intermédiaire (31) situé entre les premières coupelles amont et aval (91a, 91b), un second canal de réalimentation (22) reliant la seconde entrée de fluide (2b) à un second volume intermédiaire (32) situé entre les secondes coupelles amont et aval (92a, 92b);
- des premier et second orifices (41, 42) situés dans la partie supérieure (1a) du corps, communiquant respectivement avec les chambres de pression primaire et secondaire (5, 6) et constituant les sorties respectives de ces chambres, le premier orifice (41) se situant dans la seconde section de longueur (S2) et entre la première coupelle aval (91b) et la seconde coupelle amont (92a), et
- les pistons primaire et secondaire (3,4) étant guidés par la paroi (100) de l'alésage, lesdits pistons primaire et secondaire (3,4) étant en contact avec la paroi (100) de l'alésage et le corps (1) étant en outre percé d'un premier passage longitudinal (51) reliant la première coupelle aval (91b), la seconde coupelle amont (92a) et le premier orifice (41), et communiquant avec la chambre de pression primaire (5) par au moins un premier passage radial (61) situé entre les première et seconde sections de longueur (S1, S2),
**caractérisé en ce que** ledit passage (51) est délimité par une paroi externe et une paroi interne (51A), une première face de la paroi interne (51A) définissant le passage (51) et la deuxième face de la paroi interne opposée à la première face étant du côté de l'alésage, et **en ce que** ledit premier passage radial (61) est pratiquée dans ladite paroi interne.

2. Maître-cylindre suivant la revendication 1, **caractérisé en ce que** ledit fond (103) comprend une pièce d'obturation (13) rapportée sur le corps et recevant à coulissement le piston secondaire (4), et **en ce que** cette pièce d'obturation est percée d'un second passage longitudinal (52) mettant la seconde coupelle aval (92b) en communication avec le second orifice (42), et d'un second passage radial (62) mettant le second orifice (42) en communication avec la chambre de pression secondaire (6).

3. Maître-cylindre suivant la revendication 1 où 2, **caractérisé en ce qu'**il comprend en outre un raccord cylindrique de réalimentation (210) inséré dans le premier canal de réalimentation (21) et traversant la première coupelle aval (91b) pour atteindre directement le premier volume intermédiaire (31).

4. Maître-cylindre suivant l'une quelconque des revendications précédentes, **caractérisé en ce qu'**une pièce de guidage (14), portant la première coupelle amont (91a), est montée sur la première extrémité (101) de la paroi (100) pour guider le piston primaire (3).

## Claims

1. Tandem hydraulic master cylinder comprising:
- a body (1) pierced with a longitudinal bore delimited by an at least partially cylindrical wall (100), a first end (101) of which forms an opening, and a second end (102) of which is closed by a bottom (103), the first and second ends being separated by a distance (D) over which first and second length sections (S1, S2) contiguous with one another are defined, and this body exhibiting an upper part (1a) in which first and second inlets (2a, 2b) for a hydraulic fluid at low pressure are pierced;
- a primary piston (3) and a secondary piston (4), of cylindrical shape, both capable of sliding respectively in the first and second length sections (S1, S2);
- a primary pressure chamber (5) defined at least in part in the first length section (S1) between the primary and secondary pistons (3, 4), this chamber (5) containing at least one first spring (7) exerting between the pistons a first elastic force which tends to separate these pistons from one another;
- a second pressure chamber (6) defined in the second length section (S2) between the secondary piston (4) and the bottom (103), this chamber (6) containing at least one second spring (8) exerting between the secondary piston and the bottom (103) a second elastic force in a direction which tends to separate this secondary piston from the bottom;
- at least four sealing cups (91a, 91b, 92a, 92b) which are secured to the body and comprise first upstream and downstream cups (91a, 91b) sealing the primary chamber (5) and surrounding the primary piston (3), and second upstream and downstream cups (92a, 92b) surrounding the secondary piston (4) and separating the primary and secondary pressure chambers (5, 6) in a leaktight fashion, each downstream cup (91b, 92b) being closer to the bottom (103) of the body than the upstream cup (91a, 92a) which surrounds the same piston;
- a first resupply duct (21) connecting the first fluid inlet (2a) to a first intermediate volume (31) situated between the first upstream and downstream cups (91a, 91b), a second resupply duct (22) connecting the second fluid inlet (2b) to a second intermediate volume (32) situated between the second upstream and downstream cups (92a, 92b);
- first and second orifices (41, 42) situated in the upper part (1a) of the body, communicating respectively with the primary and secondary pressure chambers (5, 6) and constituting the respective outlets from these chambers, the first orifice (41) being situated in the second length section (S2) and between the first downstream cup (91b) and the second upstream cup (92a), and
- the primary and secondary pistons (3,4) being guided by the wall (100) of the bore, the said primary and secondary pistons (3, 4) being in contact with the wall (100) of the bore and the body (1) being furthermore pierced with a first longitudinal passage (51) connecting the first downstream cup (91b), the second upstream cup (92a) and the first orifice (41) and communicating with the primary pressure chamber (5) via at least one first radial passage (61) situated between the first and second length sections (S1, S2),
**characterized in that** the said passage (51) is delimited by an external partition and an internal partition (51A), a first face of the internal partition (51A) delimiting the passage (51) and the second face of the internal partition opposed to the first face being towards the bore, and **in that** the said first radial passage (61) is made in the said internal partition.

2. Master cylinder according to Claim 1, **characterized in that** the said bottom (103) comprises a blanking piece (13) attached to the body and slidably accommodating the secondary piston (4) and **in that** this blanking piece is pierced with a second longitudinal passage (52) placing the second downstream cup (92b) in communication with the second orifice (42) and with a second radial passage (62) placing the second orifice (42) in communication with the secondary pressure chamber (6).

3. Master cylinder according to Claim 1 or 2, **characterized in that** it further comprises a cylindrical resupply connection (210) inserted in the first resupply duct (21) and passing through the first downstream cup (91b) to reach the first intermediate volume (31) directly.

4. Master cylinder according to any one of the preceding claims, **characterized in that** a guide piece (14) carrying the first upstream cup (91a) is mounted on the first end (101) of the wall (100) to guide the primary piston (3).

## Patentansprüche

1. Hydraulischer Tandem-Hauptzylinder mit:
- einem Körper (1), der mit einer Längsbohrung versehen ist, die durch eine zumindest teilweise zylindrische Wand (100) begrenzt ist, von welcher ein erstes Ende (101) eine Öffnung bildet und von welcher ein zweites Ende (102) durch einen Boden (103) geschlossen ist, wobei das erste und das zweite Ende um einen Abstand (D) getrennt sind, auf welchem ein erster und ein zweiter Längenabschnitt (S1, S2) definiert sind, die zueinander benachbart sind, und dieser Körper einen oberen Teil (1a) aufweist, in den ein erster und ein zweiter Eingang (2a, 2b) für ein Hydraulikfluid mit niedrigem Druck gebohrt sind;
- einem Primärkolben (3) und einem Sekundärkolben (4) mit zylindrischer Form, die im ersten bzw. im zweiten Längenabschnitt (S1, S2) gleiten können;
- einer Primärdruckkammer (5), die zumindest teilweise im ersten Längenabschnitt (S1) zwischen dem Primär- und dem Sekundärkolben (3, 4) definiert ist, wobei diese Kammer (5) mindestens eine erste Feder (7) enthält, die zwischen den Kolben eine erste elastische Kraft ausübt, die diese Kolben letztlich voneinander entfernt;
- einer Sekundärdruckkammer (6), die im zweiten Längenabschnitt (S2) zwischen dem Sekundärkolben (4) und dem Boden (103) definiert ist, wobei diese Kammer (6) mindestens eine zweite Feder (8) enthält, die zwischen dem Sekundärkolben und dem Boden (103) eine zweite elastische Kraft in einer Richtung ausübt, die letztlich diesen Sekundärkolben vom Boden entfernt;
- mindestens vier Dichtungsschalen (91a, 91b, 92a, 92b), die mit dem Körper fest verbunden sind und erste vordere und hintere Schalen (91 a, 91b), die die Primärkammer (5) verschließen und den Primärkolben (3) einspannen, und zweite vordere und hintere Schalen (92a, 92b), die den Sekundärkolben (4) einspannen und die Primär- und die Sekundärdruckkammer (5, 6) in dichter Weise trennen, aufweisen, wobei jede hintere Schale (91b, 92b) näher am Boden (103) des Körpers liegt als die vordere Schale (91 a, 92a), die denselben Kolben einspannt;
- einem ersten Nachspeisungskanal (21), der den ersten Fluideingang (2a) mit einem ersten Zwischenvolumen (31) verbindet, welches sich zwischen den ersten vorderen und hinteren Schalen (91a, 91b) befindet, einem zweiten Nachspeisungskanal (22), der den zweiten Fluideingang (2b) mit einem zweiten Zwischenvolumen (32) verbindet, das sich zwischen den zweiten vorderen und hinteren Schalen (92a, 92b) befindet;
- einer ersten und einer zweiten Öffnung (41, 42), die sich im oberen Teil (1a) des Körpers befinden und mit der Primär- bzw. der Sekundärdruckkammer (5, 6) in Verbindung stehen und die jeweiligen Ausgänge dieser Kammern bilden, wobei sich die erste Öffnung (41) in dem zweiten Längenabschnitt (S2) und zwischen der ersten hinteren Schale (91 b) und der zweiten vorderen Schale (92a) befindet, und
- wobei der Primär- und der Sekundärkolben (3, 4) durch die Wand (100) der Bohrung geführt werden, wobei der Primär- und der Sekundärkolben (3, 4) mit der Wand (100) der Bohrung in Kontakt stehen und der Körper (1) außerdem mit einem ersten Längsdurchgang (51) versehen ist, der die erste hintere Schale (91b), die zweite vordere Schale (92a) und die erste Öffnung (41) verbindet, und mit der Primärdruckkammer (5) durch mindestens einen ersten radialen Durchgang (61) in Verbindung steht, der sich zwischen dem ersten und dem zweiten Längenabschnitt (S1, S2) befindet,
**dadurch gekennzeichnet, daß** der Durchgang (51) durch eine Außenwand und eine Innenwand (51A) begrenzt ist, wobei eine erste Fläche der Innenwand (51A) den Durchgang (51) definiert und die zweite Fläche der Innenwand entgegengesetzt zur ersten Fläche auf der Seite der Bohrung liegt, und daß der erste radiale Durchgang (61) in der Innenwand ausgebildet ist.

2. Hauptzylinder nach Anspruch 1, **dadurch gekennzeichnet, daß** der Boden (103) ein Verschlußstück (13) aufweist, das auf den Körper aufgesetzt ist und den Sekundärkolben (4) gleitend aufnimmt, und daß dieses Verschlußstück mit einem zweiten Längsdurchgang (52), der die zweite hintere Schale (92b) mit der zweiten Öffnung (42) in Verbindung bringt, und einem zweiten radialen Durchgang (62), der die zweite Öffnung (42) mit der Sekundärdruckkammer (6) in Verbindung bringt, versehen ist.

3. Hauptzylinder nach Anspruch 1 oder 2, **dadurch gekennzeichnet, daß** er außerdem ein zylindrisches Nachspeisungsverbindungsstück (210) aufweist, der in den ersten Nachspeisungskanal (21) eingesetzt ist und die erste hintere Schale (91b) durchquert, um direkt das erste Zwischenvolumen (31) zu erreichen.

4. Hauptzylinder nach einem der vorangehenden Ansprüche, **dadurch gekennzeichnet, daß** ein Führungsstück (14), das die erste vordere Schale (91a) trägt, am ersten Ende (101) der Wand (100) montiert ist, um den Primärkolben (3) zuführen.
